# NEUE EUROPÄISCHE PATENTSCHRIFT

(11) **EP 0 062 868 B2**
(45) Veröffentlichungstag und Bekanntmachung des Hinweises auf die Entscheidung über den Einspruch: **02.06.1993**
(45) Hinweis auf die Patenterteilung: 11.11.1987
(21) Anmeldenummer: 82102861.0
(22) Anmeldetag: 03.04.1982
(51) Int. Cl.: G07C 3/00, B60Q 9/00, G07C 5/00

(54) **Service-Intervall-Anzeigevorrichtung für Kraftmaschinen**
Device for displaying the service intervals for machines
Dispositif de visualisation de l'intervalle entre deux entretiens d'une machine

(30) Priorität: 10.04.1981 DE 3114689
(43) Veröffentlichungstag der Anmeldung: 20.10.1982
(73) Patentinhaber: Bayerische Motoren Werke Aktiengesellschaft, 80788 München (DE)
(72) Erfinder: Bourauel, Fritz, D-8000 München 45 (DE); Weishaupt, Walter, D-8000 München 71 (DE)
(74) Vertreter: Bullwein, Fritz

(56) Entgegenhaltungen:
- EP-A- 0 057 819
- CH-A- 416 190
- DE-A- 1 574 046
- DE-A- 2 353 756
- DE-A- 2 416 623
- DE-A- 2 445 638
- US-A- 3 584 507
- US-A- 3 593 012
- US-A- 3 964 302
- US-A- 4 031 363
- US-A- 4 129 037
- US-A- 4 135 246
- "Mobile Elektronik" Franzis-Verlag, 1979, München; Reiner Buchmann: "Elektronik im Armaturenbrett", Seiten 35-37
- "Elektor", November 1977; "LED-Anzeigeeinheit mit UAA 180", Seiten 34-37

## Beschreibung

Die Erfindung bezieht sich auf eine Service-Intervall-Anzeigevorrichtung für Kraftmaschinen der im ersten Teil des Anspruches 1 bezeichneten Art, wie die beispielsweise aus der US-A-4129037 bekannt ist. Die Kraftmaschinen können z. B. Brennkraftmaschinen oder Elektromotore sein. Als angetriebene Geräte kommen z. B. Kompressoren, Wärmepumpen, Kraftfahrzeuge oder Hydraulikaggregate in Frage. Die bekannte Auzeigevorrichtung berücksichtigt die während des Intervalls zwischen zwei Wartungsdiensten jeweilig auftretenden Belastungszustände der Maschinen, und weist somit auf einen Service nur dann hin, wenn er tatsächlich erforderlich ist.

Der Erfindung liegt die Aufgabe zugrunde, eine Anzeigevorrichtung des eingangs gennanten Art zu schaffen, die schon bevor ein Service erforderlich ist, deutlich erkennen läßt, wann dies zu erwarten ist. Diese Anzeige soll nicht nur belastungs- , sondern auch zeitabhängig erfolgen.

Die Lösung dieser Aufgabe ist im kennzeichnenden Teil des Patentanspruchs 1 angegeben.

Durch die Erfindung läßt sich das Service-Intervall den tatsächlichen Erfordernissen anpassen und sein Verlauf erkennen. Es wird, wie bekannt, die Belastung der Kraftmaschine berücksichtigt. Die Darstellung des Service-Intervall-Ablaufs ermöglicht es, bei hoher Belastung und damit beschleunigtem Ablauf des Service-Intervalls die Belastung zu reduzieren und damit das Ende des Service-Intervalls hinauszuschieben. Bei einer schonenden Betriebsweise, beispielsweise durch Vermeiden von extremen Drehzahlen, kann das Service-Intervall länger sein als bei ausschließlicher Berücksichtigung der Betriebsstunden oder bei einer überwiegend starken Belastung der Kraftmaschine.

Durch die Erfindung wird auch bei einer geringen jährlichen Betriebsdauer auf einen erforderlichen Service hingewiesen. Hierzu ist dem Kenngrößen- Grenzwert eine Sollzeit gerechnet ab dem letzten Service zugeordnet, nach deren Ablauf ebenfalls das Signal erscheint. In derartigen Fällen wird der Service infolge von Alterungserscheinungen, beispielsweise der verwendeten Betriebsflüssigkeiten, erforderlich; d.h. bei Erscheinungen, die bei einer "normalen" Betriebsweise nicht ins Gewicht fallen. Damit wird auch in diesem Fall das Service-Intervall optimiert und auf einen Service hingewiesen, wenn dieser notwendig ist.

Die Sollzeit ist dabei in eine der Anzahl der Kenngrößen-Intervalle gleiche Anzahl von Sollzeit-Intervallen aufgeteilt. Der Schaltzustand der Kontrolleuchten wird auch dann geändert, wenn das jeweilige Sollzeit-Intervall vor dem entsprechenden Kenngrößen-Intervall abgelaufen ist. Durch eine entsprechende Wahl von Kenngrößen-Grenzwert und Sollzeit wird erreicht, daß die Änderung des Schaltzustandes der Kontrolleuchten durch Ablauf der Sollzeit-Intervalle nur in den Fällen erfolgt, in denen die registrierte Umdrehungs-Gesamtzahl unterdurchschnittlich niedrig ist. Bestimmend für die Anzeigevorrichtung bleibt somit meist diese Umdrehungs-Gesamtzahl. Auf diese Weise läßt sich erreichen, daß schon frühzeitig auch bei relativ wenig benutzten Kraftmaschinen auf einen erforderlichen Service hingewiesen wird.

Aus der US-A-3964302 ist es schon bekannt, einen Kenngrößenbereich in Abschnitte einzuteilen und jedem dieser Abschnitte eine Kontrolleuchte zuzuordnen. Bei der Kenngröße handelt es sich zum Beispiel um den Kraftstoffvorrat, den Öldruck, die Kühlmitteltemperatur oder die Batteriespannung eines Kraftfahrzeugs.

Schließlich ist aus der US-A-4031363 eineAnzeigevorrichtung für Kraftfahrzeuge bekannt, bei der auf Knopfdruck durch den Fahrzeugbenutzer die bis zum nächsten Service noch verbleibende Zeit bzw. alternativ die bis zum nächsten Service noch verbleibende Wegstrecke angezeigt werden. Auch hier ist einem Kenngrößengrenzwert, nämlich einer bestimmten maximalen Wegstrecke, eine maximale Zeitdauer zugeordnet. Wird einer dieser Grenzwerte erreicht, wird angezeigt, daß eine Wartung erforderlich ist.

Die Berücksichtigung der Belastung kann in verschiedener Weise erfolgen. Der zusätzliche Anteil läßt sich schaltungstechnisch besonders einfach und mit großer Genauigkeit dadurch berücksichtigen, daß die Umdrehungszahl vor ihrer Registrierung mit dem Faktor multipliziert wird. Eine derartige Multiplikation kann beispielsweise durch Einführen von Vorteilern vorgenommen werden, denen Impulse entsprechend den Umdrehungen zugeführt werden und die beispielsweise bei einer extremen Belastung der Kraftmaschine geschaltet werden, so daß eine Bewertung der Umdrehungszahl entsprechend der Belastung erfolgt.

Dieser Faktor kann in unterschiedlicher Weise zur Geltung kommen. So ist es beispielsweise möglich, daß der Faktor nur ab einer bestimmten Höhe eines Betriebsparameters wirksam bzw. unwirksam ist. Der Faktor kann dabei solange ein- bzw. ausgeschaltet sein, wie der genannte Wert vorliegt oder aber bis eine vorgegebene Umdrehungszahl erreicht ist.

Der Faktor kann aber auch nur innerhalb eines bestimmten, nach oben und unten begrenzten Bereichs der Werte eines Betriebsparameters wirksam bzw. unwirksam sein. In diesem Fall wird der Faktor ebenfalls nur während einer bestimmten Belastung der Kraftmaschine wirksam, während er bei einer «normalen» Belastung nicht in Erscheinung tritt. Dadurch kann auch hier der rechnerische Aufwand gering gehalten werden.

Der vorstehend genannte Faktor kann konstant sein oder sich entsprechend dem Wert des Betriebsparameters ändern. Während ein konstanter, Faktor mit geringem Rechenaufwand berücksichtigt werden kann, bietet ein sich ändernder Faktor den Vorteil, daß der durch den Faktor gegebene Zuschlag entsprechend den tatsächlichen Erfordernissen gewählt werden und das Service-Intervall optimal vorgegeben werden kann.

Eine weitere Optimierung des Service-Intervalls läßt sich dadurch erzielen, daß der Faktor aus mehreren Teilfaktoren zusammengesetzt ist, die verschiedenen Betriebsparametern zugeordnet sind. Da eine übermäßige Belastung der Kraftmaschine bei extremen Werten unterschiedlicher Parameter auftreten kann, läßt sich durch Berücksichtigung aller oder eines Großteils dieser Parameter das Service-Intervall exakt, bestimmen.

Das Belastungs-Kriterium kann in bestimmten Fällen aus der belastungsabhängigen Drehzahländerung derAusgangswelle, abgeleitet werden, als Belastungskriterium kann aber auch die Temperatur einer Betriebsflüssigkeit wie Kühlwasser oder Motoröl, und/oder die Energiemittelverbrauchsrate dienen. Für sämtliche Kriterien sind üblicherweise ohnehin bereits Geber vorgesehen, so daß die Aufnahme dieses Kriteriums mit geringem apparativen Aufwand möglich ist.

Häufig wird es ausreichend sein, die den Teilintervallen zugeordneten Kontrolleuchten nur während des Einschaltens bzw. des Anlassens der Kraftmaschine einzuschalten und unmittelbar danach auszuschalten. Bei jedem Einschaltvorgang erhält der Betreiber somit Auskunft über die noch verbleibende Betriebsperiode und ist andererseits während des Betriebs durch die Kontrolleuchten nicht gestört.

Zusätzlich zu den Kontrolleuchten kann, sofern der Service nicht durchgeführt wird, bei Erreichen des in Verbindung mit einer belastungsabhängigen Bewertung aus der Umdrehungszahl der Ausgangswelle gebildeten Kenngrößen-Grenzwertes eine Warnanzeige z. B. in Form einer einzigen Warnleuchte mit von den Kontrolleuchten unterschiedlicher Farbe bleibend eingeschaltet werden. Ferner können zusätzliche Warnleuchten nach gleichen Überziehungs-Intervallen bleibend eingeschaltet werden. Diese Intervalle können halb so groß wie die Kenngrößen-Intervalle sein. Mit zunehmender Dringlichkeit wird ein Hinweis auf die Notwendigkeit einer Wartung gegeben.

Gleichzeitig mit oder anstelle einer Warnanzeige kann eine Leuchtschrift bleibend eingeschaltet und so ebenfalls deutlich auf die Notwendigkeit eines Services hingewiesen werden.

Da der bei Ablauf der Sollzeit erforderliche Service von dem bei Erreichen der Kenngrößen-Grenze notwendigen Service in der Regel verschieden ist - in letzterem Fall wird z. B. nur ein Ölservice erforderlich sein - kann bei Ablauf der Sollzeit eine Leuchtschrift eingeschaltet werden, die von der bei Erreichen des Kenngrößen-Grenzwerts eingeschalteten Leuchtschrift verschieden ist. Diese Unterscheidung kann beispielsweise durch die Leuchtschriften «Inspektion» beim Kenngößen-Grenzwert und «Ölservice» nach der Sollzeit erreicht werden.

Wie bei Erreichen des Kenngrößen-Grenzwerts kann auch bei Überschreiten der Sollzeit eine Warnanzeige bleibend eingeschaltet werden.

Diese Warnanzeige kann in den Warnleuchten für die Überziehungs-Intervalle bestehen. Hierzu sind den Überziehungs-Intervallen gleiche Überziehungszeit-Intervalle zugeordnet, die etwa halb so groß wie die Sollzeit-Intervalle sind und bei deren Ablauf vor Ablauf des zugehörigen Überziehungs-Intervalls ebenfalls diese Warnleuchten eingeschaltet werden. Durch diese Halbierung der ZeitIntervalle nach Ablauf der Sollzeit ergibt sich auch bei wenig benutzten Kraftmaschinen wesentlich schneller eine Verstärkung der Warnfunktion.

In den meisten Fällen wird eine Wartung lange vor Ablauf der Sollzeit bei Erreichen des Kenngrössen-Grenzwertes durchgeführt. Als Beispiel mag für den Anwendungsfall bei einer Brennkraftmaschine eines Kraftfahrzeugs für die Sollzeit ein Zeitraum von elf Monaten und für den Kenngrößen-Grenzwert ein Wert von 2 - 10⁷ registrierten Umdrehungen gelten. Die Wartung besteht in diesem Fall z. B. in einem Ölservice. Nach etwa dem Doppelten des Kenngrößen-Grenzwerts, dem sog. Maximalwert, ist meist eine umfangreichere Wartung erforderlich. Diese Wartung entspricht im Umfang etwa der Wartung nach Ablauf der Sollzeit. Um auf eine derartige Wartung mit Hilfe der Anzeigevorrichtung besonders deutlich hinzuweisen, wird nach Durchführen einer Wartung nach Erreichen des Kenngrößen-Grenzwerts die Differenz des vorliegenden Kenngrößen-Wertes von einem gegenüber dem Grenzwert etwa doppelt so großen Maximalwert in gleiche Differenz-Intervalle aufgeteilt, deren Anzahl gleich der Anzahl der Kenngrößen-Intervalle ist und die an deren Stelle treten. Unmittelbar nach Durchführen einer derartigen Wartung ergibt sich, daß der Schaltzustand der Kontrolleuchten durch die abgelaufene Zeit, die unverändert berücksichtigt wird, bestimmt ist. Im weiteren Verlauf wird der Schaltzustand der Kontrolleuchten dann aber wieder häufig durch die Umdrehungs-Gesamtzahl bestimmt werden.

Wie beim Kenngrößen-Grenzwert und nach Ablauf der Sollzeit kann auch beim Maximalwert die Warnanzeige eingeschaltet werden. Der Fahrer erhält dann auch in diesem Fall eine präzise Aussage darüber, um wieviel er den Maximalwert überschritten hat.

Zusätzlich kann bei Erreichen des Maximalwerts dieselbe Leuchtschrift wie bei Ablauf der Sollzeit eingeschaltet werden. Auf diese Weise wird berücksichtigt, daß die in beiden Fällen durchzuführende Wartung weitgehend gleich ist.

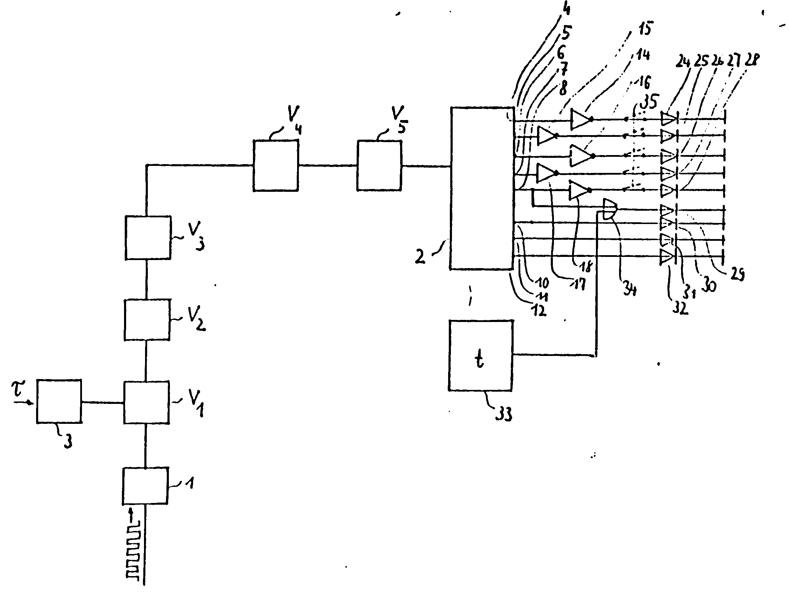

Die Erfindung ist anhand eines in der Zeichnung dargestellten Ausführungsbeispiels weiter erläutert. Die Zeichnung zeigt eine Service-Intervall-Anzeigevorrichtung für eine Brennkraftmaschine, bei der die Umdrehungszahl der Ausgangswelle entsprechend der Belastung bewertet ist.

In die Schaltanordnung gelangen Impulse entsprechend der Umdrehungszahl einerAusgangswelle. Diese gelangen über einen Typcodierer 1, mit dem unterschiedliche Typen von Kraftmaschinen oder angetriebenen Geräten berücksichtigt werden, über Vorteiler V₁ bis V₅ in einen Speicher 2. Der Vorteiler V₁ berücksichtigt eine extreme Belastung der Brennkraftmaschine infolge einer niedrigen Temperatur einer Betriebsflüssigkeit, wie beispielsweise dem Motoröl. Hierzu ist das Ausgangssignal eines nicht dargestellten Motoröl-Temperaturgebers auf einen Komparator 3 geführt, der unter einervorgegebenen Temperaturvon z. B. 320 Kein Ausgangssignal liefert und den VorteilerV1 dann ausschaltet. Das bedeutet, daß der Vorteiler V₁ über dieser Temperatur wirksam ist und dann die Zahl der an den Vorteiler V₂ weitergegebenen Impulse verringert.

Der Vorteiler V₂ berücksichtigt die Kraftstoffverbrauchsrate und ist solange eingeschaltet, wie diese Rate unter einem vorgegebenen Grenzwert liegt.

Die Vorteiler V₃ und V₄ berücksichtigen eine Belastung der Brennkraftmaschine anhand der Drehzahl der Ausgangswelle oder eines rotierenden Teils selbst. Der Vorteiler V₃ ist dabei solange eingeschaltet, bis eine vorgegebene Grenz-Drehzahl von z. B. 5 000/Min. noch nicht erreicht ist. DerVorteilerV₄ istsolange wirksam, bis die Drehzahl einen zweiten, höheren Grenzwert von z. B. 6 000/Min. übersteigt. Die Vorteiler V₃ und V₄ berücksichtigen somit digital unterschiedlich hohe Drehzahlen.

Die Ausschaltdauer der Vorteiler V₁ bis V₄ kann solange gewählt sein, wie die berücksichtigte extreme Belastung des Fahrzeugmotors anhält. Sie kann aber auch für eine vorgegebene Zeit bzw. Umdrehungszahl gewählt sein. Hierzu können nicht dargestellte Zeitglieder bzw. Umdrehungsimpulszähler dienen, die die Ausschaltdauer der Vorteiler bestimmen.

Der Vorteiler V₅ liefert für vorgegebene Umdrehungs-Gesamtzahlen von z. B. 4· 10⁶ jeweils ein Ausgangssignal. Diese Zahl entspricht, sofern ausschließlich extreme Belastungen der Brennkraftmaschine aufgetreten sind und daher sämtliche Vorteiler V₁ bis V₄ unwirksam waren, exakt der tatsächlichen Umdrehungs-Gesamtzahl. Im Normalfall hingegen ist diese Zahl entsprechend den durch die Vorteiler V₁ bis V₄ gegebenen Belastungs-Faktoren kleiner als die tatsächliche Umdrehungs-Gesamtzahl. Das Verhältnis der mit Hilfe der Vorteiler V₁ bis V₄ berechneten und der tatsächlichen Gesamtzahl ist umso größer, je kleiner die Belastung der Brennkraftmaschine gewesen ist.

Die Ausgangsimpulse der Vorteilers V₅ gelangen in den als Schieberegister ausgebildeten Speicher 2, der seine Ausgänge 4 bis 8 und 10 bis 12 im Abstand von 4 · 10⁶ Umdrehungen bewerteter, d. h. durch Berechnung aus der tatsächlichen Zahl gewonnener Gesamtzahl einschaltet.

Die Ausgänge 4 bis 8 sind über Inverter 14 bis 18 mit z. B. grünen Leuchtdioden 24 bis 28 verbunden, die der Reihe nach im Abstand dieser Umdrehungs-Gesamtzahlen erlöschen. Entsprechend der Betriebsweise und den übrigen Bedingungen bleiben die Leuchtdioden, bezogen auf die Intervalle von 4 · 10⁶ Umdrehungen, und im Verhältnis zu einer Betriebsweise mit extremer Belastung der Brennkraftmaschine umso länger eingeschaltet, je schonender die Brennkraftmaschine betrieben wird.

Der Ausgang 8 des Speichers 2 ist ferner überein ODER-Glied 34 mit einer Leuchtdiode 29 verbunden, die z. B. eine gelbe Farbe besitzt. Die Leuchtdiode 29 ist ferner über einen Zeitgeber 33 und das ODER-Glied 34 angesteuert, der nach einer Betriebsdauer von z. B. 11 Monaten nach Durchführen der letzten Wartung ein Ausgangssignal liefert. Die Leuchtdiode 29, die bei 20 · 106 Umdrehungen entsprechend fünf Ausgangsimpulsen des Vorteilers V₅ bleibend leuchtet, wird somit auch nach der durch den Zeitgeber 33 bestimmten Sollzeit eingeschaltet und macht auch in diesem Fall darauf aufmerksam, daß ein Service erforderlich ist.

Weitere, z. B. rote Leuchtdioden 30 bis 32 sind an den Ausgängen 10 bis 12 des Speichers 2 unmittelbar angeschlossen und verstärken den Hinweis auf die Dringlichkeit einer durchzuführenden Wartung.

Anstelle von lediglich digital wirkenden Vorteilern V₁ bis V₄ kann die Belastung der Brennkraftmaschine auch analog berücksichtigt werden. Hierzu können Rechenglieder vorgesehen sein, die die ankommenden Umdrehungsimpulse mit einem entsprechend dem berücksichtigten Betriebsparameter veränderlichen Faktor multiplizieren bzw. im Falle mehrerer Betriebsparameter die Summe derartiger veränderlicher Faktoren bilden.

Um eine unnötige Beeinträchtigung des Fahrers durch die Anzeigevorrichtung zu vermeiden, können zumindest die Leuchtdioden 24 bis 28 in Reihe mit einem Öldruckschalter 35 oder dgl. geschaltet sein. Sofern die zugehörigen Sollweg-Strecken noch nicht abgelaufen sind, leuchten die Leuchtdioden solange bis das Betriebskriterium der Brennkraftmaschine (hier Motoröldruck) erfüllt ist.

Durch entsprechende Erweiterung der dargestellten Schaltanordnung können die den Leuchtdioden 30 bis 32 zugeordneten Überziehungs-Intervalle gegenüber den Intervallen für die Leuchtdioden 24 bis 29 halbiert werden. Hierzu kann beispielsweise zwischen dem Vorteiler V₄ und dem Vorteiler V₅ ein Faktor-2-Vorteiler eingeschaltet sein, der solange wirksam ist, bis der Ausgang 8 des Speichers 2 eingeschaltet ist. Um die Leuchtdioden 24 bis 28 aus- bzw. gleichzeitig mit dem Ausschalten der Leuchtdiode 28 die Leuchtdiode 29 einzuschalten, bedarf es insgesamt zehn Impulse, während für das Einschalten der Leuchtdioden 30 bis 32 lediglich drei Impulse des Vorteilers V₅ erforderlich sind.

Ferner kann durch entsprechende Beschaltung neben der Leuchtdiode 29 auch den Leuchtdioden 24 bis 28 und 30 bis 32 ein Zeitintervall zugeordnet werden. Anstelle des Zeitgebers 33 ist dann ein Speicher entsprechend dem Speicher 2 vorzusehen, der die gleiche Anzahl von Ausgängen besitzt und der durch einen Zeitgeber getaktet ist. Jeder Ausgang dieses Speichers ist wie die Ausgänge des Speichers 2 und über zusätzlich vorzusehende ODER-Glieder entsprechend dem ODER-Glied 34 an den Leuchtdioden 24 bis 32 angeschlossen. Durch eine analoge Vorteiler-Schaltung kann auch hiererreichtwerden, daß die den Leuchtdioden 30 bis 32 dann zugeordneten Überziehungszeit-Intervalle gegenüber den Sollzeit-Intervallen für die Leuchtdioden 24 bis 28 (bzw. 29) halbiert sind.

Entsprechend dem gewünschten Anwendungsfall ist es auch möglich, eine Belastung einer Kraftmaschine, die sich durch eine Drehzahlverminderung bemerkbar macht bzw. eine relative Entlastung, die durch ein Ansteigen der Drehzahl erkennbar ist, zu berücksichtigen. Dieser Fall liegt beispielsweise bei einer Kraftmaschine für einen Kompressor vor. Auch hierfür können die Vorteiler V₃ und V₄ vorgesehen sein. Im Unterschied zu dem beschriebenen Anwendungsfall der Brennkraftmaschine z. B. für ein Kraftfahrzeug werden bei relativ niedriger Drehzahl (hohe Belastung) die Vorteiler V₃ und V₄ unwirksam geschaltet. Bei mittlerer Drehzahl (normale Belastung) ist dann nur einer der beiden Vorteiler wirksam geschaltet. Bei höheren Drehzahlen (geringe Belastung) sind dann beide Vorteiler V₃ und V₄ wirksam. Auf diese Weise wird erreicht, daß die bewertete Drehzahl im umgekehrten Verhältnis zur tatsächlichen Drehzahl steht.

Aus Gründen der Übersichtlichkeit wird darauf verzichtet, Erweiterungen der Schaltanordnung darzustellen, mit denen zwischen zwei Servicearten unterschieden werden kann. Eine derartige, in der EP-A-0 057 821 dargestellte Schaltanordnung beinhaltet einen weiteren Speicher, der nach Durchführen eines ersten Services anstelle des Speichers 2 auf die Leuchtdioden 24 bis 32 geschaltet wird. Seinen Takt erhält er im Abstand von gleichen Differenz-Intervallen, die durch Aufteilung der Differenz der beim ersten Service vorliegenden Umdrehungszahl und einem gegenüber dem Grenzwert doppelt so großen Umdrehungs-Maximalwert gebildet sind. Mit dieser Erweiterung verbunden können auch unterschiedliche Leuchtschriften sein, die bei Erreichen des Umdrehungszahl-Grenzwerts auf den ersten Service und bei Erreichen des Umdrehungszahl-Maximalwerts bzw. bei Ablauf der Sollzeit auf den zweiten Service hinweisen.

## Patentansprüche

1. Service-Intervall-Anzeigevorrichtung für Kraftmaschinen, die über eine Ausgangswelle weitere Geräte antreiben, mit einem Signalerzeuger, der bei Erreichen eines Kenngrößen-Grenzwertes ein Signal liefert, wobei die Kenngröße aus der Umdrehungs-Gesamtzahl der Ausgangswelle und einem zusätzlichen Anteil zusammengesetzt ist, der entsprechend der Belastung der Kraftmaschine gebildet ist, und diese Belastung durch einen von dieser abhängigen Faktor berücksichtigt ist, mit dem die Umdrehungszahl der Ausgangswelle vor ihrer Registrierung beaufschlagt wird, dadurch gekennzeichnet, daß der durch den Grenzwert definierte Bereich der Kenngröße in gleiche Intervalle unterteilt ist und jedem dieser Intervalle eine Kontrolleuchte (24 bis 28) zugeordnet ist, die am Ende des Intervalls erlischt, daß dem Kenngrößen-Grenzwert eine Sollzeit zugeordnet ist, die in eine der Anzahl von Kenngrößen-Intervallen gleiche Anzahl von Sollzeit-Intervallen aufgeteilt ist und daß die Kontrolleuchten (24 bis 28) der Reihe nach dann erlöschen wenn das jeweilige Sollzeit-Intervall vor dem entsprechenden Kenngrößen-Intervall abgelaufen ist.

2. Anzeigevorrichtung nach Anspruch 1, dadurch gekennzeichnet, daß der Faktor nur ab einer bestimmten Höhe eines Betriebsparameters wirksam ist.

3. Anzeigevorrichtung nach Anspruch 1, dadurch gekennzeichnet, daß der Faktor nur innerhalb eines nach oben und unten begrenzten Bereiches der Werte eines Betriebsparameters wirksam ist.

4. Anzeigevorrichtung nach Anspruch 3, dadurch gekennzeichnet, daß der Faktor konstant ist.

5. Anzeigevorrichtung nach Anspruch 3, dadurch gekennzeichnet, daß der Faktor sich entsprechend dem Wert des Betriebsparameters ändert.

6. Anzeigevorrichtung nach einem der Ansprüche 2 bis 5, dadurch gekennzeichnet, daß der Faktor aus mehreren Teilfaktoren zusammengesetzt ist, die verschiedenen Betriebsparametern zugeordnet sind.

7. Anzeigevorrichtung nach einem derAnsprüche 1 bis 6, dadurch gekennzeichnet, daß das Kriterium der Belastung aus der belastungabhängigen Drehzahländerung derAusgangswelle abgeleitet wird.

8. Anzeigevorrichtung nach einem derAnsprüche 1 bis 6, dadurch gekennzeichnet, daß als Kriterium der Belastung die Temperatur einer Betriebsflüssigkeit dient.

9. Anzeigevorrichtung nach Anspruch 8, dadurch gekennzeichnet, daß die Betriebsflüssigkeit das Kühlwasser ist.

10. Anzeigevorrichtung nach Anspruch 8, dadurch gekennzeichnet, daß die Betriebsflüssigkeit das Motoröl ist.

11. Anzeigevorrichtung nach einem derAnsprüche 1 bis 6, dadurch gekennzeichnet, daß als Kriterium der Belastung die Energiemittelverbrauchsrate dient.

12. Anzeigevorrichtung nach einem der Ansprüche 1-11, dadurch gekennzeichnet, daß die Kontrolleuchten auch unmittelbar nach dem Einschalten der Kraftmaschine erlöschen.

13. Anzeigevorrichtung nach einem der Ansprüche 1-12, dadurch gekennzeichnet, daß gleichzeitig mit dem Erlöschen der Kontrolleuchte (24) für das letzte Kenngrößn-Intervall eine Leuchtschrift («Ölservice») bleibend eingeschaltet wird.

14. Anzeigevorrichtung nach einem derAnsprüche 1 bis 13, dadurch gekennzeichnet, daß bei Überschreiten des Kenngrößen-Grenzwerts eine Warnanzeige bleibend eingeschaltet wird.

15. Anzeigevorrichtung nach Anspruch 14, dadurch gekennzeichnet, daß die Warnanzeige eine Warnleuchte (29) mit von der der Kontrolleuchten (24-28) unterschiedlicher Farbe ist.

16. Anzeigevorrichtung nach Anspruch 15, dadurch gekennzeichnet, daß die dort genannte Warnleuchte (29) und weitere Warnleuchten (30-32) nach gleichen Überziehungs-Intervallen sukzessive eingeschaltet werden.

17. Anzeigevorrichtung nach Anspruch 16, dadurch gekennzeichnet, daß die Überziehungs-Intervalle etwa halb so groß wie die Kenngrößen-Intervalle sind.

18. Anzeigevorrichtung nach einem derAnsprüche 1 17, dadurch gekennzeichnet, daß die Warnanzeige auch bei Überschreiten der Sollzeit bleibend eingeschaltet wird.

19. Anzeigevorrichtung nach Anspruch 18, dadurch gekennzeichnet, daß bei Ablauf der Sollzeit eine Leuchtschrift ("Inspektion") eingeschaltet wird, die von der nach dem letzten Kenngrößen-Intervall eingeschalteten Leuchtschrift ("Öservice") verschieden ist.

20. Anzeigevorrichtung nach einem der Ansprüche 16 bis 19, dadurch gekennzeichnet, daß auch den dort genannten Überziehungs-Intervallen gleiche Überziehungszeit-Intervalle zugeordnet sind, die etwa halb so groß wie die Sollzeit-Intervalle sind und bei deren Ablauf vor Ablauf des zugehörigen Überziehungs-Intervalls ebenfalls die Warnleuchten (29-32) eingeschaltet werden.

21. Anzeigevorrichtung nach einem derAnsprüche 1 bis 20, dadurch gekennzeichnet, daß nach Durchführung einer Wartung vor Ablauf der Sollzeit die Differenz zwischen dem dann vorliegenden Kenngrößen-Wert und einem gegenüber dem Grenzwert etwa doppelt so großen Maximalwert in gleiche Differenz-Intervalle aufgeteilt wird, deren Anzahl gleich der Anzahl der Kenngrößen-Intervalle ist und die an deren Stelle treten.

22. Anzeigevorrichtung nach Anspruch 21, dadurch gekennzeichnet, daß die Warnanzeige bei Überschreiten des Maximalwerts eingeschaltet wird.

23. Anzeigevorrichtung nach Anspruch 22, dadurch gekennzeichnet, daß bei Erreichen des Maximalwerts dieselbe Leuchtschrift ("Inspektion") wie bei Ablauf der Sollzeit eingeschaltet wird.

## Claims

1. A service-interval indicator device for prime movers which drive further appliances through an output shaft, comprising a signal generator which delivers a signal when a characteristic limit value is reached, the characteristic being the sum of the total revolutions of the output shaft and an additional proportion which corresponds to the load on the prime mover, this load being taken into consideration by means of a load-dependent factor which is applied to the number of revolutions of the output shaft before its recording, characterised in that the range of the characteristic defined by the limit value is divided into equal intervals, and a monitor light (24 to 28) is allocated to each of these intervals and is extinquished at the end of the interval, that an ideal time is allocated to the characteristic limit value with this ideal time being divided into a number of ideal time intervals equal to the number of characteristic intervals, and that the monitor lights (24-28) are also extinquished in turn when the ideal time interval in each case has elapsed before the corresponding characteristic interval.

2. An indicator device according to Claim 1, characterised in that the factor is effective only from a specific level of a working parameter.

3. An indicator device according to Claim 1, characterised in that the factor is effective only within a predetermined range of values, between upper and lower limits, of a working parameter.

4. An indicator device according to Claim 3, characterised in that the factor is constant.

5. An indicator divice according to Claim 3, characterised in that the factor varies in accordance with the value of the working parameter.

6. An indicator device according to any one of Claims 2 to 5, charactorised in that the factor is the sum of a plurality of component factors which are allocated to different working parameters.

7. An indicator device according to any one of Claims 1 to 6, characterised in that the criterion of the load is derived from the load-dependent rotation rate variation of the output shaft.

8. An indicator device according to any one of Claims 1 to 6, characterised in that the temperature of a working fluid serves as a criterion of the load.

9. An indicator device according to Claim 8, characterised in that the working fluid is the cooling water.

10. An indicator device according to Claim 8, characterised in that te working fluid is the engine oil.

11. An indicator device according to any one of Claims 1 to 6, characterised in that the energy medium consumption rate serves as a criterion of the load.

12. An indicator device according to any one of Claims 1 to 11, characterised in that the monitor lights are extinguished immediately after the switching-on of the prime mover.

13. An indicator device according to any one of Claims 1 to 12, characterised in that, simultaneously with the extinguishing of the monitor light (24) forthe last characteristic interval, a luminous inscription ("oil service") is permanently switched on.

14. An indicator device according to any one of Claims 1 to 13, characterised in that, on the car- acteristic limit value being exceeded, a warning indication is permanently switched on.

15. An indicator device according to Claim 14, characterised in that the warning indication is a warning light (29) of a colour different from that of the monitor lights (24-28).

16. An indicator device according to Claim 15, characterised in that the warning light (29) mentioned therein and further warning lights (30-32) are switched on in succession after equal overlap intervals.

17. An indicator device according to Claim 16, characterised in that the overlap intervals are about half as great as the characteristic intervals.

18. An indicator device according to any one of Claim 1 to 17, characterised in that the warning indication is also switched on permanently on the ideal time being exceeded.

19. An indicator device according to Claim 18, characterised in that, on elapse of the ideal time, a luminous inscription ("inspection") is switched on which is different from the luminous inscription ("oil service") switched on after the last characteristic interval.

20. An indicator device according to any one of Claims 16 to 19, characterised in that equal overlap time intervals are allocated to the overlap intervals mentioned there too, which equal overlap time intervals are about half as great as the ideal time intervals and on the elapse of which, before the elapse of the respective overlap interval, the warning lights (29-32) are likewise switched on.

21. An indicator device according to any one of Claims 1 to 20, characterised in that, after the execution of a maintenance operation before elapse of the ideal time, the difference of the characteristic value then present from a maximum value about twice as great as the limit value is divided up into equal difference intervals, the number of which is equal to the number of the characteristic intervals and wich replace the latter.

22. An indicator device according to Claim 21, characterised in that the warning indication is switched on if the maximum value is exceeded.

23. An indicator device according to Claim 22, characterised in that, when the maximum value is reached, the same luminous inscription ("inspection") is switched on as on elapse of the ideal time.

## Revendications

1. Dispositif d'affichage de l'intervalle d'opérations d'entretien (révision) de moteurs qui entrainent d'autres appareils par l'intermédiaire d'unarbre de sortie, avec un générateur de signal qui fournit un signal lorsqu'on atteint une limite de grandeurs caractéristiques, les grandeurs caractéristiques se composant du nombre total de rotations de l'arbre de sortie et d'une partie complémentaire formée en fonction de la charge du moteur et en ce que la charge est prise en compte par un coefficient dépendant de celle-ci et qui est appliqué au nombre de tours de l'arbre de sortie avant sa mise en mémoire, caractérisé en ce que la plage des grandeurs caractéristiques définies par la limite est subdivisée en des intervalles égaux et à chacun de ces intervalles est associé un voyant de contrôle qui s'éteint à la fin de l'intervalle, caractérisé en ce qu'une durée de consigne est associée à la limite de grandeurs caractéristiques, durée qui est subdivisée en un certain nombre d'intervalles de grandeurs caractéristiques égal au nombre des intervalles de durée de consigne et en ce que les voyants de controle (24-28) sant égatement modifiées tour à tour lorsque l'intervalle de durée de consigne respectif se termine avant l'intervalle de grandeurs caractéristiques correspondant.

2. Dispositif d'affichage selon la revendication . 1. caractérisé en ce que le coefficient n'agit que pour une amplitude prédéterminée d'un paramétre de fonctionnement.

3. Dispositif d'affichage selon la revendication 1. caractérisé en ce que le coefficient n'est mis en oeuvre qu'à l'intérieur d'une plage prédéterminée d'un paramétre de fonctionnement.

4. Dispositif d'affichage selon la revendication 3, caractérisé en ce que le coefficient est constant.

5. Dispositif d'affichage selon la revendication 3, caractérisé en ce que le coefficient varie en fonction de la valeur du paramétre de fonctionnement.

6. Dispositif d'affichage selon l'une des revendications 2 à 5, caractérisé en ce que le coefficient se compose de plusieurs coefficients partiels qui sont associés aux différents paramétres de fonctionnement.

7. Dispositif d'affichage selon l'une quelconque des revendications 1 à 6, caractérisé en ce que le critère de charge est dérivé de la variation de vitesse de rotation dépendant de la charge de l'arbre de sortie.

8. Dispositif d'affichage selon l'une des revendications 1 à 6, caractérisé en ce que le critère de la charge est la température d'un fluide de fonctionnement.

9. Dispositif d'affichage selon la revendication 8, caractérisé en ce que le fluide de fonctionnement est l'eau de refroidissement.

10. Dispositif d'affichage selon la revendication 8, caractérisé en ce que le fluide de fonctionnement est l'huile du moteur.

11. Dispositif d'affichage selon l'une des revendications 1 à 6, caractérisé en ce que le critère de la charge est la vitesse de consommation d'énergie.

12. Dispositif d'affichage selon l'une des revendications 1 à 11, caractérisé en ce que les voyants de contrôle s'éteignent immédiatement après la mise en route du moteur.

13. Dispositif d'affichage selon l'une des revendications 1 à 12, caractérisé en ce qu'en meme temps que s'éteint le voyant de controle (24) du dernier intervalle de grandeurs caractéristiques, une inscription lumineuse (vidange d'huile) reste branchée en permanence.

14. Dispositif d'affichage selon l'une des revendications 1 à 13, caractérisé en ce que lors du dépassement de la limite de grandeurs caractéristiques, un témoin-avertisseur reste branché en continu.

15. Dispositif d'affichage selon la revendication 14, caractérisé en ce que le témoin-avertisseur est un voyant-avertisseur (29) de couleur différente de celle des voyants de contrôle (24-28).

16. Dispositif d'affichage selon la revendication 15, caractérisé en ce que le voyant-avertisseur (29) et les autres voyants-avertisseurs (30-32) sont mis en oeuvre dans des intervalles de dépassement successifs identiques.

17. Dispositif d'affichage selon la revendication 16, caractérisé en ce que l'intervalle de dépassement correspond sensiblement à la moitié de l'intervalle de grandeurs caractéristiques.

18. Dispositif d'affichage selon l'une des revendications 1 à 17, caractérisé en ce que le voyant-avertisseur est également mis en oeuvre de ma- niére permanente lors du dépassement de la durée de consigne.

19. Dispositif d'affichage selon l'une des revendications 18, caractérisé en ce qu'à la fin de la durée de consigne, une inscription lumineuse (révision) se met en oeuvre, inscription qui est différente de l'inscription lumineuse (vidange d'huile) mise en oeuvre le dernier intervalle de grandeurs caractéristiques.

20. Dispositif d'affichage selon l'une des revendications 16 à 19, caractérisé en ce que des intervalles de dépassement identiques sont également associés aux intervalles de dépassement, intervalles qui sont moitié moins grands que les intervalles de temps de consigne et à la fin de ces intervalles, avant la fin de l'intervalle de dépassement correspondant, les voyants avertisseurs sont également mis en oeuvre (29-32).

21. Dispositif d'affichage selon l'une des revendications 1 à 20, caractérisé en ce qu'après l'exécution d'une opération d'entretien, avant la fin de la durée de consigne, on subdivise la différence de la valeur de la grandeur caractéristique existant à ce moment et de la valeur maximale sensiblement double de la valeur limite, en des intervalles de différence identiques dont le nombre est égal au nombre des intervalles de grandeurs caractéristiques et qui remplacent ceux-ci.

22. Dispositif d'affichage selon la revendication 21, caractérisé en ce que l'affichage d'avertissement est mis en oeuvre lors du dépassement de la valeur maximale.

23. Dispositif d'affichage selon la revendication 22, caractérisé en ce que lorsqu'on atteint la valeur maximale, la meme inscription lumineuse (inspection) que celle à la fin de la durée de consigne est mise en oeuvre.
